# EUROPEAN PATENT APPLICATION

(11) **EP 4 769 129 A1**
(43) Date of publication of application: **01.07.2026**
(21) Application number: 25220485.4
(22) Date of filing: 03.12.2025
(51) Int. Cl.: G06F 9/30

(54) **MATRIX TRANSPOSE PROCESSING METHOD AND COMPUTING DEVICE**

(30) Priority: 31.12.2024 CN 202411996358
(71) Applicant: Ant Group Co., Ltd., Hangzhou, Zhejiang 310007 (CN)
(72) Inventor: TANG, Xin, Hangzhou, Zhejiang 310000 (CN); SONG, Jie, Hangzhou, Zhejiang 310000 (CN); LI, Xiaodong, Hangzhou, Zhejiang 310000 (CN); HAN, Shu, Hangzhou, Zhejiang 310000 (CN)
(74) Representative: Winter, Brandl - Partnerschaft mbB

(57) **Abstract**

Embodiments of the present specification provide a matrix transpose processing method and a computing device. The method includes: in response to receiving a first transpose instruction for partial data of a first matrix, recording, by an instruction recording unit, a current status of the first transpose instruction as a waiting-for-issuing state; performing intra-core instruction issuing status check for the instruction, and when an intra-core instruction issuing condition is met, instructing the instruction recording unit to change the current status of the instruction to a waiting-for-synchronization state; when instructions of the plurality of processor cores on the first matrix are all in the waiting-for-synchronization state, changing the current status of the instruction to a waiting-for-work state; and performing, by a transpose execution unit, a transpose operation on the partial data of the first matrix.

## Description

### TECHNICAL FIELD

One or more embodiments of this specification relate to the field of computers, and in particular, to a matrix transpose processing method and a computing device.

### BACKGROUND

Currently, matrix transpose processing is involved in many scenarios. For example, fully homomorphic encryption (fully homomorphic encryption, FHE) is often used in privacy protection, and a data object of fully homomorphic encryption is a polynomial with a length of N. Usually, in an application, the length of the polynomial is flexibly set to various values such as 1024, 2048, 4096, ..., and 65536. For number-theoretic transform (number-theoretic transform, NTT) and automorphism (automorphisms) operations that are necessary for the fully homomorphic encryption, it is relatively difficult to directly implement parallel computing of polynomials with the foregoing lengths. There is a problem of difficulty in implementing interconnection of permutation (permutation) networks between polynomial coefficients because the networks are excessively large. Therefore, the NTT and automorphism operations are usually implemented according to 2D algorithms during hardware implementation. Using a 65536-point NTT as an example, twice of matrix transpose operation are introduced in the 2D algorithm, and a size of the matrix is 256×256.

In the existing technology, matrix transposition is a global data permutation operation, has a natural requirement for synchronization and data consistency, and is difficult to implement in a multi-core architecture. Therefore, a manner in which a single processor core processes one matrix is used, causing low execution efficiency of the transpose processing.

### SUMMARY

One or more embodiments of this specification describe a matrix transpose processing method and a computing device, to implement multi-core parallel computing of transpose processing, thereby improving execution efficiency.

According to a first aspect, a matrix transpose processing method is provided. The method is performed by any target processor core of a plurality of processor cores. The target processor core includes an instruction issuing unit, an instruction recording unit, and a transpose execution unit. The method includes:
in response to receiving a first transpose instruction for partial data of a first matrix, recording, by the instruction recording unit, a current status of the first transpose instruction as a waiting-for-issuing state;
performing, by the instruction issuing unit, intra-core instruction issuing status check for the first transpose instruction, and when a checking result is that an intra-core instruction issuing condition is met, instructing the instruction recording unit to change the current status of the first transpose instruction to a waiting-for-synchronization state;
performing, by the instruction recording unit, inter-core instruction issuing status check for the first transpose instruction, and when first transpose instructions of the plurality of processor cores on the first matrix are all in the waiting-for-synchronization state, changing the current status of the first transpose instruction to a waiting-for-work state; and
issuing, by the instruction issuing unit, the first transpose instruction in the waiting-for-work state to the transpose execution unit, and performing, by the transpose execution unit, a transpose operation on the partial data of the first matrix, to obtain local transpose result data.

In a possible implementation, the target processor core further includes a data interaction unit, and the method further includes:
determining, by the data interaction unit, partial result data of the local transpose result data separately corresponding to each of the processor cores, and allocating the partial result data to the each of the processor cores, so that another processor core determines, based on the partial result data, a part of global transpose result data of performing the transpose operation on the first matrix.

In a possible implementation, the target processor core further includes a data interaction unit, and the method further includes:
receiving, by using the data interaction unit from another processor core, partial result data of the local transpose result data allocated to the another processor core; and
combining the partial result data of the local transpose result data allocated to the another processor core and allocated partial result data received from other processor cores as a part of global transpose result data of performing the transpose operation on the first matrix.

In a possible implementation, the plurality of processor cores are configured to execute a same fully homomorphic encryption computing task in parallel, the task relates to a plurality of transpose instructions, and a sequence in which the plurality of transpose instructions enter a processor core is the same for the plurality of processor cores.

In a possible implementation, the first matrix is formed by a polynomial coefficient of a first polynomial.

In a possible implementation, the instruction recording unit includes an instruction directory table and a state machine control module, the instruction directory table includes an instruction field and a state field, and the state machine control module is configured to update a state field of each instruction.

Further, the recording a current status of the first transpose instruction as a waiting-for-issuing state includes:
determining a first entry in an idle state in the instruction directory table, recording the first transpose instruction in an instruction field of the first entry, and recording a state field of the first entry as waiting for issuing.

In a possible implementation, the instruction issuing unit includes a score board module, and the intra-core instruction issuing status check includes: performing data conflict check and resource conflict check by using the score board module.

In a possible implementation, the method further includes:
after the issuing, by the instruction issuing unit, the first transpose instruction to the transpose execution unit, changing, by the instruction recording unit, the current status of the first transpose instruction to a working state.

Further, the method further includes:
after the transpose execution unit completes executing the first transpose instruction, changing, by the instruction recording unit, the current status of the first transpose instruction to a done state.

Further, the method further includes:
when the first transpose instruction retires, changing the first entry to the idle state in the instruction directory table.

According to a second aspect, a computing device is provided, including a plurality of processor cores. Any target processor core in the plurality of processor cores includes: an instruction issuing unit, an instruction recording unit, and a transpose execution unit.

The instruction recording unit is configured to: in response to receiving a first transpose instruction for partial data of a first matrix, record a current status of the first transpose instruction as a waiting-for-issuing state.

The instruction issuing unit is configured to: perform intra-core instruction issuing status check for the first transpose instruction, and when a checking result is that an intra-core instruction issuing condition is met, instruct the instruction recording unit to change the current status of the first transpose instruction to a waiting-for-synchronization state.

The instruction recording unit is further configured to: perform inter-core instruction issuing status check for the first transpose instruction, and when first transpose instructions of the plurality of processor cores on the first matrix are all in the waiting-for-synchronization state, change the current status of the first transpose instruction to a waiting-for-work state.

The instruction issuing unit is further configured to issue the first transpose instruction in the waiting-for-work state to the transpose execution unit, and the transpose execution unit performs a transpose operation on the partial data of the first matrix, to obtain local transpose result data.

According to a third aspect, a computer-readable storage medium is provided, having a computer program stored thereon. When executed in a computer, the computer program causes the computer to perform the method in the first aspect.

According to a fourth aspect, a computing device is provided, including a memory and a processor. The memory has executable code stored therein, and the processor, when executing the executable code, implements the method in the first aspect.

According to the method and the computing device provided in the embodiments of this specification, each of the plurality of processor cores includes an instruction recording unit, the instruction recording unit records a status of a transpose instruction in the processor core, and completes, based on the status, intra-core issuing condition check of the transpose instruction in the core and inter-core data consistency check of same transpose instructions. The requirement on synchronization and data consistency of multi-core transposition are resolved by using hardware, asynchronous processing of multi-core parallel computing is implemented, and multi-core parallel computing of transpose processing can be implemented, thereby improving execution efficiency.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following descriptions show merely some embodiments of the present invention, and a person of ordinary skill in the art may still derive other drawings from these accompanying drawings without creative efforts.
FIG. 1 is a schematic diagram of an implementation scenario according to an embodiment disclosed in this specification;
FIG. 2 is a schematic diagram of a column NTT operation according to an embodiment disclosed in this specification;
FIG. 3 is a schematic diagram of an implementation scenario according to another embodiment disclosed in this specification;
FIG. 4 is a schematic diagram of a row NTT operation according to an embodiment disclosed in this specification;
FIG. 5 is a schematic diagram of multi-core asynchronous computing according to an embodiment disclosed in this specification;
FIG. 6 is a flowchart of a matrix transpose processing method according to an embodiment;
FIG. 7 is a schematic block diagram of a computing device according to another embodiment;
FIG. 8 is a schematic diagram of a matrix transpose hardware architecture according to an embodiment; and
FIG. 9 is a schematic diagram of an instruction directory table and status switching according to an embodiment.

### DETAILED DESCRIPTION

The following describes the solution provided in this specification with reference to the accompanying drawings.

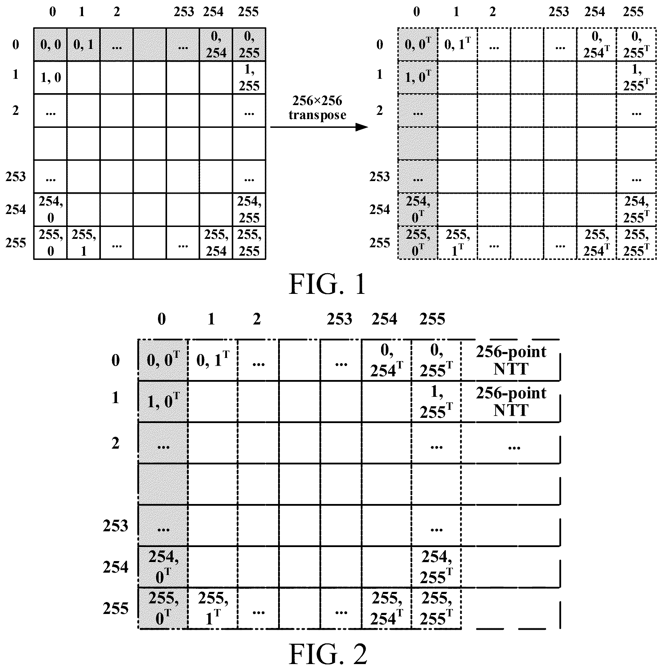

FIG. 1 is a schematic diagram of an implementation scenario according to an embodiment disclosed in this specification. The implementation scenario relates to matrix transpose processing, which is specifically a type of matrix transpose processing in FHE computation. It may be understood that the matrix transpose processing may be an intermediate processing sub-process of a processing process. Typically, a huge quantity of NTT operations and automorphism operations need to be performed in FHE computation. Operation data objects are polynomials of 1024 points to 65536 points. When a plurality of computing units are used to perform parallel computing, there are a large quantity of data paths in a permutation (permutation) network. Using a 65536-point NTT as an example, a quantity of data paths is 16×65536, which cannot be implemented in hardware design. Therefore, generally, the NTT operations and the automorphism operations are implemented by using a 2D algorithm. Using the 65536-point NTT as an example, a 65536-point polynomial is split into 256 256-point sub-polynomials to perform NTT operations. A computation process of the 2D NTT algorithm includes: considering the 65536 points as a 256×256 matrix, and performing a 256×256 matrix transpose operation; performing 256 column NTT operations, where a sub-polynomial of each operation is one column of 256-point NTT data; performing a 256×256 matrix transpose operation; and performing 256 row NTT operations, where a sub-polynomial of each operation is one row of 256-point NTT data.

Referring to FIG. 1, for a 256×256 matrix, row indexes of the 256×256 matrix may be sequentially numbered 0 to 255, and column indexes of the 256×256 matrix may be sequentially numbered 0 to 255. Positions of elements in the matrix may be identified by using the row indexes and the column indexes. For example, "0, 0" represents an element in the 0^{th} row and the 0^{th} column, "0, 1" represents an element in the 0^{th} row and the 1^{st} column, and "1, 0" represents an element in the 1^{st} row and the 0^{th} column. Matrix transposition means exchanging rows and columns of a matrix, that is, the rows of the original matrix become the columns, the columns of the original matrix become the rows, and the 0^{th} row of the original matrix becomes the 0^{th} column of the transposed matrix. For a transposed matrix, "1, 0^{T}" represents an element in the 1^{st} row and the 0^{th} column of the matrix, and corresponds to "0, 1" in the original matrix. In other words, an element value of the element in the 1^{st} row and the 0^{th} column of the transposed matrix is the same as that of the element in the 0^{th} row and the 1^{st} column of the original matrix.

FIG. 2 is a schematic diagram of a column NTT operation according to an embodiment disclosed in this specification. It may be understood that the column NTT operation is a computation sub-process of the foregoing 2D NTT algorithm, and is performed depending on the transposed matrix obtained in FIG. 1. Referring to FIG. 2, 256-point NTT is performed on each row of the transposed matrix. Because a row of the transposed matrix corresponds to a column of the original matrix, a column NTT operation is implemented.

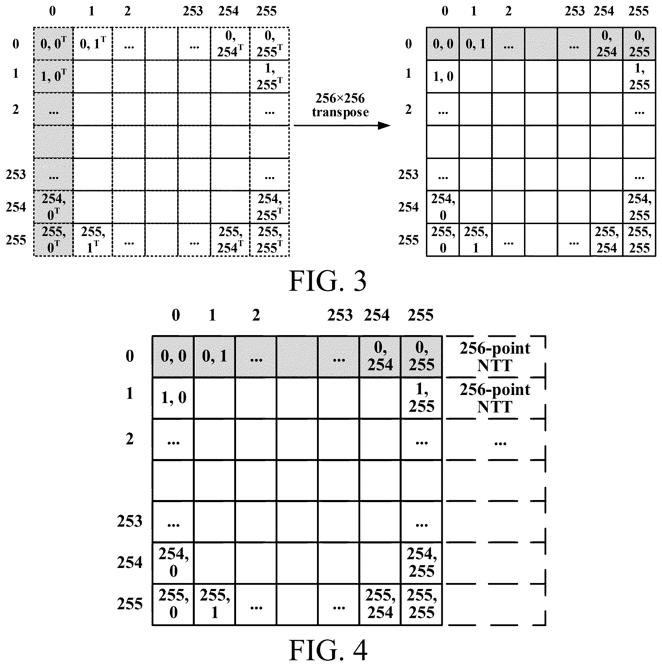

FIG. 3 is a schematic diagram of an implementation scenario according to another embodiment disclosed in this specification. The implementation scenario relates to matrix transpose processing, which is specifically another type of matrix transpose processing in FHE computation. It may be understood that the matrix transpose processing is a computation sub-process of the foregoing 2D NTT algorithm, and may be performed after the column NTT operation in FIG. 2. Referring to FIG. 3, a matrix transpose operation continues to be performed on the transposed matrix obtained in FIG. 1, to obtain the original matrix. It may be understood that the matrix transposition satisfies the following basic property, to be specific, the original matrix is obtained by performing the transpose operation on the original matrix twice.

FIG. 4 is a schematic diagram of a row NTT operation according to an embodiment disclosed in this specification. It may be understood that the row NTT operation is a computation sub-process of the foregoing 2D NTT algorithm, and is performed depending on the original matrix obtained in FIG. 3. Referring to FIG. 4, 256-point NTT is separately performed on each row of the original matrix, thereby implementing the row NTT operation.

The foregoing FIG. 1 to FIG. 4 show a processing process of the 2D NTT algorithm, where twice of matrix transpose operations are involved. The 2D automorphism operation also has a similar computation process, and details are not described herein again.

Usually, in the FHE computation, under the 2D algorithm, a quantity of permutation networks becomes 8×256, which is reduced by 512 times compared with the original quantity of 16×65536, thereby greatly reducing hardware implementation costs. The 2D algorithm introduces twice of 256×256 matrix transpose operations, and this matrix transpose operation needs to be performed by all parallel computing units simultaneously. Regardless of a single-instruction multi-thread (single instruction multiple threads, SIMT)-based multi-core architecture or a multiple instruction stream multiple data stream (multi instruction multi data, MIMD)-based multi-core architecture, this global matrix transpose operation is very difficult to be implemented due to the synchronization requirement and the data consistency requirement, and limits performance improvement of multi-core asynchronous computing. In the embodiments of this specification, a high-efficient hardware solution is designed to implement a global permutation operation, to implement multi-core parallel computing acceleration for FHE.

It should be noted that the matrix transpose processing has a wide application scenario, and may be but is not limited to the matrix transpose processing in the FHE computation.

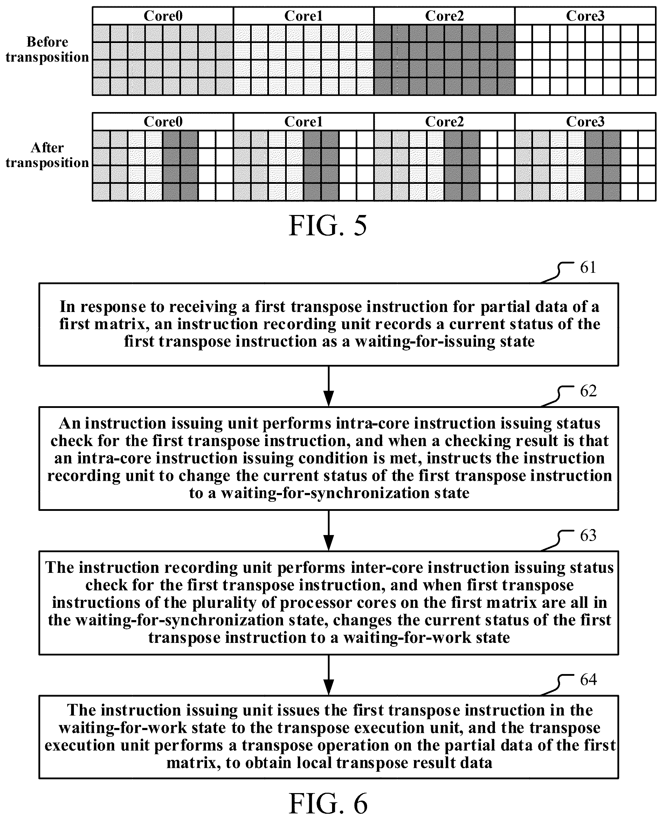

FIG. 5 is a schematic diagram of multi-core asynchronous computing according to an embodiment disclosed in this specification. Referring to FIG. 5, the essence of transposition is data permutation. When a plurality of processor cores transpose one polynomial simultaneously, data volumes of source data and target data of each processor core remain unchanged, but data in each processor core is allocated to all the processor cores. For example, four processor cores are respectively denoted as Core0, Core1, Core2, and Core3. When the four processor cores perform transpose operations on a polynomial, each processor core separately obtains partial data allocated to the processor core that is one fourth of the polynomial, and performs the transpose operation on the partial data, to obtain local transpose result data. Local transpose result data obtained by one processor core is allocated to all processor cores, so that each processor core obtains a part of global transpose result data through combination based on the allocated partial result data.

In the embodiments of this specification, that a plurality of processor cores performs transpose operations in parallel for a polynomial is equivalent to that all the processor cores simultaneously execute a same instruction. After the instruction is executed, data is exchanged between the plurality of processor cores. Therefore, a problem of data consistency between multiple cores needs to be considered before the instruction is executed, and a corresponding solution needs to be provided.

FIG. 6 is a flowchart of a matrix transpose processing method according to an embodiment. The method may be performed by any target processor core of a plurality of processor cores based on the implementation scenario shown in FIG. 1 or FIG. 3. The target processor core includes an instruction issuing unit, an instruction recording unit, and a transpose execution unit. As shown in FIG. 6, the matrix transpose processing method in this embodiment includes the following steps: Step 61: In response to receiving a first transpose instruction for partial data of a first matrix, the instruction recording unit records a current status of the first transpose instruction as a waiting-for-issuing state. Step 62: The instruction issuing unit performs intra-core instruction issuing status check for the first transpose instruction, and when a checking result is that an intra-core instruction issuing condition is met, instructs the instruction recording unit to change the current status of the first transpose instruction to a waiting-for-synchronization state. Step 63: The instruction recording unit performs inter-core instruction issuing status check for the first transpose instruction, and when first transpose instructions of the plurality of processor cores on the first matrix are all in the waiting-for-synchronization state, changes the current status of the first transpose instruction to a waiting-for-work state. Step 64: The instruction issuing unit issues the first transpose instruction in the waiting-for-work state to the transpose execution unit, and the transpose execution unit performs a transpose operation on the partial data of the first matrix, to obtain local transpose result data. Specific execution manners of the foregoing steps are described below.

First, in step 61, in response to receiving a first transpose instruction for partial data of a first matrix, the instruction recording unit records a current status of the first transpose instruction as a waiting-for-issuing state. It may be understood that, the first matrix is allocated to a plurality of processor cores for a transpose operation in parallel, and each processor core obtains partial data of the first matrix.

For example, the first matrix is data of 256 rows and 256 columns. Division may be performed according to rows: The first matrix is evenly allocated to four processor cores, the 1^{st} row to the 64^{th} row are allocated to a processor core A, the 65^{th} row to the 128^{th} row are allocated to a processor core B, the 129^{th} row to the 192^{th} row are allocated to a processor core C, and the 193^{th} row to the 256^{th} row are allocated to a processor core D. Alternatively, division may be performed according to columns: The first matrix is evenly allocated to the four processor cores, the 1^{st} column to the 64^{th} column are allocated to the processor core A, the 65^{th} column to the 128^{th} column are allocated to the processor core B, the 129^{th} column to the 192^{th} column are allocated to the processor core C, and the 193^{th} column to the 256^{th} column are allocated to the processor core D.

It should be noted that, data of the matrix may be evenly allocated to the processor cores, or may not be evenly allocated. For example, data may be allocated based on processing capabilities of the processor cores. More data is allocated to a processor core having a strong processing capability, and less data is allocated to a processor core having a weak processing capability.

In an example, the plurality of processor cores are configured to execute a same fully homomorphic encryption computing task in parallel, the task relates to a plurality of transpose instructions, and a sequence in which the plurality of transpose instructions enter a processor core is the same for the plurality of processor cores.

In this example, objects targeted by the transpose instructions are usually different. For example, a transpose instruction A is for performing transpose processing on a first matrix, and a transpose instruction B is for performing transpose processing on a second matrix. Different transpose instructions may be distinguished based on time required to be executed in a program.

In an example, the first matrix is formed by a polynomial coefficient of a first polynomial.

In this example, corresponding to an NTT operation scenario, a 65536-point polynomial may be considered as a 256×256 matrix.

In an example, the instruction recording unit includes an instruction directory table and a state machine control module, the instruction directory table includes an instruction field and a state field, and the state machine control module is configured to update a state field of each instruction.

In this example, the state machine control module may update the state field based on a mathematics model such as a finite state machine (finite state machine, FSM).

Further, the recording a current status of the first transpose instruction as a waiting-for-issuing state includes:
determining a first entry in an idle state in the instruction directory table, recording the first transpose instruction in an instruction field of the first entry, and recording a state field of the first entry as waiting for issuing.

In this example, when an entry in the instruction directory table is not used, a state field of the entry is the idle state.

Then, in step 62, the instruction issuing unit performs intra-core instruction issuing status check for the first transpose instruction, and when a checking result is that an intra-core instruction issuing condition is met, instructs the instruction recording unit to change the current status of the first transpose instruction to a waiting-for-synchronization state. It may be understood that the foregoing intra-core instruction issuing status check only needs to be independently completed by a single processor core, and does not need cooperation of other processor cores.

In an example, the instruction issuing unit includes a score board module, and the intra-core instruction issuing status check includes: performing data conflict check and resource conflict check by using the score board module.

In this example, the score board module may be used for dynamic scheduling in pipeline processing, and can avoid the data conflict and resource conflict.

Next, in step 63, the instruction recording unit performs inter-core instruction issuing status check for the first transpose instruction, and when first transpose instructions of the plurality of processor cores on the first matrix are all in the waiting-for-synchronization state, changes the current status of the first transpose instruction to a waiting-for-work state. It may be understood that the foregoing inter-core instruction issuing status check needs cooperation of other processor cores.

In the embodiments of this specification, based on the inter-core instruction issuing status check, it is ensured that the transpose instruction can be issued and executed after reaching the issuing status in all processor cores, and execution correctness of the transpose instruction is ensured by using a hardware means.

Finally, in step 64, the instruction issuing unit issues the first transpose instruction in the waiting-for-work state to the transpose execution unit, and the transpose execution unit performs the transpose operation on the partial data of the first matrix, to obtain local transpose result data. It may be understood that the foregoing transpose operation is performed by a single processor core, and a common processing manner may be adopted.

In an example, the target processor core further includes a data interaction unit, and the method further includes:
determining, by the data interaction unit, partial result data of the local transpose result data separately corresponding to each of the processor cores, and allocating the partial result data to the each of the processor cores, so that another processor core determines, based on the partial result data, a part of global transpose result data of performing a transpose operation on the first matrix.

In this example, the target processor core allocates partial result data to another processor core, so that the another processor core determines a part of global transpose result data.

In an example, the target processor core further includes a data interaction unit, and the method further includes:
receiving, by using the data interaction unit from another processor core, partial result data of the local transpose result data allocated to the another processor core; and
combining the partial result data of the local transpose result data allocated to the another processor core and allocated partial result data received from other processor cores as a part of global transpose result data of performing the transpose operation on the first matrix.

In this example, the target processor core receives partial result data from other processor cores, and may determine a part of the global transpose result data.

In an example, the method further includes:
after the issuing, by the instruction issuing unit, the first transpose instruction to the transpose execution unit, changing, by the instruction recording unit, the current status of the first transpose instruction to a working state.

In this example, specifically, the state field corresponding to the first transpose instruction in the instruction directory table may be updated to the working state.

Further, the method further includes:
after the transpose execution unit completes executing the first transpose instruction, changing, by the instruction recording unit, the current status of the first transpose instruction to a done state.

In this example, specifically, the state field corresponding to the first transpose instruction in the instruction directory table may be updated to the done state.

Further, the method further includes:
when the first transpose instruction retires, changing the first entry to the idle state in the instruction directory table.

In this example, the transpose instruction is retired in a first-in-first-out manner. When the transpose instruction is retired, the state field corresponding to the first transpose instruction is updated to the idle state in the instruction directory table.

According to the method provided in the embodiments of this specification, each of the plurality of processor cores includes an instruction recording unit, the instruction recording unit records a status of a transpose instruction in the processor core, and completes, based on the status, intra-core issuing condition check of the transpose instruction in the core and inter-core data consistency check of same transpose instructions. The requirement on synchronization and data consistency of multi-core transposition are resolved by using hardware, asynchronous processing of multi-core parallel computing is implemented, and multi-core parallel computing of transpose processing can be implemented, thereby improving execution efficiency.

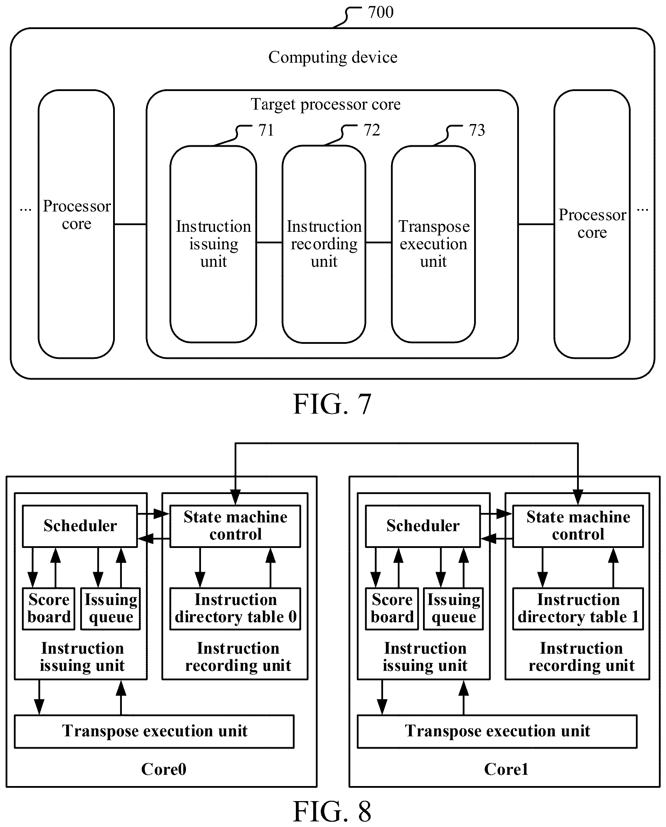

According to an embodiment in another aspect, a computing device is further provided. The computing device is configured to perform the method provided in the embodiment shown in FIG. 6 of this specification. FIG. 7 is a schematic block diagram of a computing device according to another embodiment. As shown in FIG. 7, a computing device 700 includes a plurality of processor cores, and any target processor core in the plurality of processor cores includes an instruction issuing unit 71, an instruction recording unit 72, and a transpose execution unit 73.

The instruction recording unit 72 is configured to: in response to receiving a first transpose instruction for partial data of a first matrix, record a current status of the first transpose instruction as a waiting-for-issuing state.

The instruction issuing unit 71 is configured to: perform intra-core instruction issuing status check for the first transpose instruction, and when a checking result is that an intra-core instruction issuing condition is met, instruct the instruction recording unit 72 to change the current status of the first transpose instruction to a waiting-for-synchronization state.

The instruction recording unit 72 is further configured to: perform inter-core instruction issuing status check for the first transpose instruction, and when first transpose instructions of the plurality of processor cores on the first matrix are all in the waiting-for-synchronization state, change the current status of the first transpose instruction to a waiting-for-work state.

The instruction issuing unit 71 is further configured to issue the first transpose instruction in the waiting-for-work state to the transpose execution unit 73, and the transpose execution unit 73 performs a transpose operation on the partial data of the first matrix, to obtain local transpose result data.

In the embodiments of this specification, a quantity of the plurality of processor cores is not limited, and may be but is not limited to two, three, four, or the like. Any one of the processor cores may be considered as the target processor core, and the processor cores may have the same structure.

Optionally, in an embodiment, the target processor core further includes a data interaction unit, and the data interaction unit is configured to: determine partial result data of the local transpose result data separately corresponding to each of the processor cores, and allocate the partial result data to the each of the processor cores, so that another processor core determines, based on the partial result data, a part of global transpose result data of performing the transpose operation on the first matrix.

Optionally, in an embodiment, the target processor core further includes a data interaction unit, and the data interaction unit is configured to: receive, from another processor core, partial result data of the local transpose result data allocated to the another processor core; and combine the partial result data of the local transpose result data allocated to the another processor core and allocated partial result data received from other processor cores as a part of global transpose result data of performing the transpose operation on the first matrix.

Optionally, in an embodiment, the plurality of processor cores are configured to execute a same fully homomorphic encryption computing task in parallel, the task relates to a plurality of transpose instructions, and a sequence in which the plurality of transpose instructions enter a processor core is the same for the plurality of processor cores.

Optionally, in an embodiment, the first matrix is formed by a polynomial coefficient of a first polynomial.

Optionally, in an embodiment, the instruction recording unit 72 includes an instruction directory table and a state machine control module, the instruction directory table includes an instruction field and a state field, and the state machine control module is configured to update a state field of each instruction.

Further, the instruction recording unit 72 is specifically configured to: determine a first entry in an idle state in the instruction directory table, record the first transpose instruction in an instruction field of the first entry, and record a state field of the first entry as waiting for issuing.

Optionally, in an embodiment, the instruction issuing unit 71 includes a score board module, and the instruction issuing unit 71 is specifically configured to: perform data conflict check and resource conflict check by using the score board module.

Optionally, in an embodiment, the instruction recording unit 72 is further configured to: after the instruction issuing unit 71 issues the first transpose instruction to the transpose execution unit 73, change the current status of the first transpose instruction to a working state.

Further, the instruction recording unit 72 is further configured to: after the transpose execution unit 73 completes executing the first transpose instruction, change the current status of the first transpose instruction to a done state.

Further, the instruction recording unit 72 is further configured to: when the first transpose instruction retires, change the first entry to the idle state in the instruction directory table.

According to the computing device provided in the embodiments of this specification, each of the plurality of processor cores includes an instruction recording unit 72, the instruction recording unit 72 records a status of a transpose instruction in the processor core, and completes, based on the status, intra-core issuing condition check of the transpose instruction in the core and inter-core data consistency check of same transpose instructions. The requirement on synchronization and data consistency of multi-core transposition are resolved by using hardware, asynchronous processing of multi-core parallel computing is implemented, and multi-core parallel computing of transpose processing can be implemented, thereby improving execution efficiency.

FIG. 8 is a schematic diagram of a matrix transpose hardware architecture according to an embodiment. Referring to FIG. 8, an example in which two processor cores perform transpose operations on a matrix in parallel is used. The two processor cores are respectively marked as Core0 and Core1. Each processor core includes an instruction issuing unit, an instruction recording unit, and a transpose execution unit. The instruction issuing unit further includes a scheduler, a score board module, and an issuing queue. The instruction recording unit further includes a state machine control module and an instruction directory table. The instruction directory table is configured to store a status of the transpose instruction. The instruction directory tables inside the plurality of processor cores form a distributed directory. An intra-core status and an inter-core status of the instruction may be queried by using the distributed directory. For example, Core0 may obtain the intra-core status by querying an instruction directory table 0, and obtain the inter-core status by querying an instruction directory table 1. When a multi-core processor is configured to execute the same fully homomorphic encryption computing task, sequences of all transpose instructions entering the processor cores remain the same for all the processor cores, and the plurality of transpose instructions constitute the issuing queue.

When an item in the instruction directory table is not used, a status of the item is an idle state, which is marked as idle. When the transpose instruction enters the processor core, the state machine control module inside the processor core allocates an item in the instruction directory table to record a status of the transpose instruction, and in this case, the status in the instruction directory table is changed to a waiting-for-issuing state, which is marked as wait_issue. When obtaining that the transpose instruction is in the waiting-for-issuing state, the scheduler schedules the score board module to perform intra-core instruction issuing status check, including a data conflict check and a resource conflict check. When an intra-core instruction issuing condition is satisfied, the scheduler notifies the state machine control module to change the status to waiting-for-synchronization in the instruction directory table, which is marked as wait_sync. When the transpose instruction is in the waiting-for-synchronization state, the state machine control module performs inter-core instruction issuing state check, to be specific, obtains a status of the transpose instruction from other processor cores, and when instructions of all the processor cores including the same matrix are in the waiting-for-synchronization state, changes the status in the instruction directory table to a waiting-for-work state, which is marked as wait_work. In the waiting-for-work state, the transpose instruction may be normally issued by the instruction issuing unit to the transpose execution unit to perform a transpose operation. After the instruction issuing unit issues the transpose instruction to the transpose execution unit, the status in the instruction directory table is changed to a working state, which is marked as work. After execution of the transpose instruction is completed by the transpose execution unit, the status in the instruction directory table is changed to a done state, which is marked as done. The transpose instruction is retired in a first-in-first-out manner. When the transpose instruction is retired, the status in the instruction directory table is changed to an idle state, and is marked as idle.

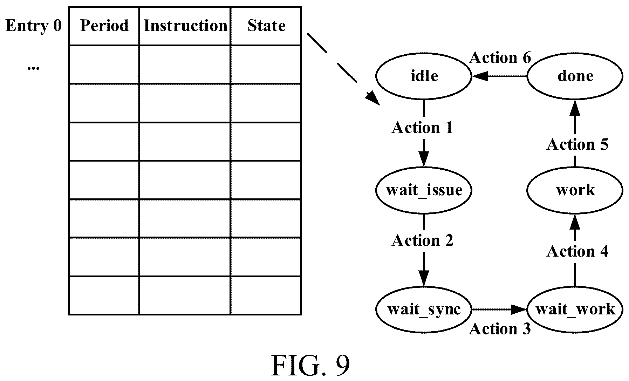

FIG. 9 is a schematic diagram of an instruction directory table and status switching according to an embodiment. Referring to FIG. 9, the instruction directory table includes several entries. Each entry records information about an instruction, including a period, an instruction, and a state. The state may perform transition. A process in which a state is converted into another state when some actions are performed is state transition, and the state transition defines a transition process of a state machine. In a state, when a transition condition is met, transition is performed to a next state according to the transition process of the state machine, and a corresponding action is performed. For example, when an action 1 is performed in an idle state, transition is performed to a wait_issue state; when an action 2 is performed in the wait_issue state, transition is performed to a wait_sync state; when an action 3 is performed in the wait_sync state, transition is performed to a wait_work state; when an action 4 is performed in the wait_work state, transition is performed to a work state; when an action 5 is performed in the work state, transition is performed to a done state; and when an action 6 is performed in the done state, transition is performed to the idle state.

In the embodiments of this specification, when the application scenario is matrix transposition in FHEs, the computing device may be an FHE acceleration chip. A distributed directory is designed to record states of a same transpose instruction at different processor cores. After each processor core independently completes determining of a transpose instruction issuing condition of the processor core, instruction issuing states of a plurality of processor cores are synchronized, thereby ensuring that the transpose operation is issued and executed after all the processor cores are in an issuing state. The execution correctness and the execution efficiency of the transpose instruction are ensured by using a hardware means, thereby implementing a hardware architecture in which one polynomial can be allocated to multiple cores to simultaneously perform an FHE operation.

According to another aspect, an embodiment further provides a computer-readable storage medium, having a computer program stored thereon. When executed in a computer, the computer program causes the computer to perform the method described with reference to FIG. 6.

According to still another aspect, an embodiment further provides a computing device, including a memory and a processor. The memory has executable code stored therein, and the processor, when executing the executable code, implements the method described with reference to FIG. 6.

A person skilled in the art should be aware that in the foregoing one or more examples, functions described in the present invention may be implemented by using hardware, software, firmware, or any combination thereof. When implemented using software, the functions may be stored in a computer-readable medium or may be used as one or more instructions or code in the computer-readable medium for transmission.

The foregoing specific implementations further describe the objectives, technical solutions, and beneficial effects of the present invention in detail. It should be understood that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A matrix transpose processing method, performed by any target processor core of a plurality of processor cores, the target processor core comprising an instruction issuing unit, an instruction recording unit, and a transpose execution unit, and the method comprising:
in response to receiving a first transpose instruction for partial data of a first matrix, recording, by the instruction recording unit, a current status of the first transpose instruction as a waiting-for-issuing state;
performing, by the instruction issuing unit, intra-core instruction issuing status check for the first transpose instruction, and when a checking result is that an intra-core instruction issuing condition is met, instructing the instruction recording unit to change the current status of the first transpose instruction to a waiting-for-synchronization state;
performing, by the instruction recording unit, inter-core instruction issuing status check for the first transpose instruction, and when first transpose instructions of the plurality of processor cores on the first matrix are all in the waiting-for-synchronization state, changing the current status of the first transpose instruction to a waiting-for-work state; and
issuing, by the instruction issuing unit, the first transpose instruction in the waiting-for-work state to the transpose execution unit, and performing, by the transpose execution unit, a transpose operation on the partial data of the first matrix, to obtain local transpose result data.

2. The method according to claim 1, wherein the target processor core further comprises a data interaction unit, and the method further comprises:
determining, by the data interaction unit, partial result data of the local transpose result data separately corresponding to each of the processor cores, and allocating the partial result data to the each of the processor cores, so that another processor core determines, based on the partial result data, a part of global transpose result data of performing the transpose operation on the first matrix.

3. The method according to claim 1, wherein the target processor core further comprises a data interaction unit, and the method further comprises:
receiving, by using the data interaction unit from another processor core, partial result data of the local transpose result data allocated to the another processor core; and
combining the partial result data of the local transpose result data allocated to the another processor core and allocated partial result data received from other processor cores as a part of global transpose result data of performing the transpose operation on the first matrix.

4. The method according to claim 1, wherein the plurality of processor cores are configured to execute a same fully homomorphic encryption computing task in parallel, the task relates to a plurality of transpose instructions, and a sequence in which the plurality of transpose instructions enter a processor core is the same for the plurality of processor cores.

5. The method according to claim 1, wherein the first matrix is formed by a polynomial coefficient of a first polynomial.

6. The method according to claim 1, wherein the instruction recording unit comprises an instruction directory table and a state machine control module, the instruction directory table comprises an instruction field and a state field, and the state machine control module is configured to update a state field of each instruction.

7. The method according to claim 6, wherein the recording a current status of the first transpose instruction as a waiting-for-issuing state comprises:
determining a first entry in an idle state in the instruction directory table, recording the first transpose instruction in an instruction field of the first entry, and recording a state field of the first entry as waiting for issuing.

8. The method according to claim 1, wherein the instruction issuing unit comprises a score board module, and the intra-core instruction issuing status check comprises: performing data conflict check and resource conflict check by using the score board module.

9. The method according to claim 1, wherein the method further comprises:
after the issuing, by the instruction issuing unit, the first transpose instruction to the transpose execution unit, changing, by the instruction recording unit, the current status of the first transpose instruction to a working state.

10. The method according to claim 9, wherein the method further comprises:
after the transpose execution unit completes executing the first transpose instruction, changing, by the instruction recording unit, the current status of the first transpose instruction to a done state.

11. The method according to claim 7, wherein the method further comprises:
when the first transpose instruction retires, changing the first entry to the idle state in the instruction directory table.

12. A computing device, comprising a plurality of processor cores, any target processor core in the plurality of processor cores comprising: an instruction issuing unit, an instruction recording unit, and a transpose execution unit, wherein
the instruction recording unit is configured to: in response to receiving a first transpose instruction for partial data of a first matrix, record a current status of the first transpose instruction as a waiting-for-issuing state;
the instruction issuing unit is configured to: perform intra-core instruction issuing status check for the first transpose instruction, and when a checking result is that an intra-core instruction issuing condition is met, instruct the instruction recording unit to change the current status of the first transpose instruction to a waiting-for-synchronization state;
the instruction recording unit is further configured to: perform inter-core instruction issuing status check for the first transpose instruction, and when first transpose instructions of the plurality of processor cores on the first matrix are all in the waiting-for-synchronization state, change the current status of the first transpose instruction to a waiting-for-work state; and
the instruction issuing unit is further configured to issue the first transpose instruction in the waiting-for-work state to the transpose execution unit, and the transpose execution unit performs a transpose operation on the partial data of the first matrix, to obtain local transpose result data.

13. The computing device according to claim 12, wherein the target processor core further comprises a data interaction unit, and the data interaction unit is further configured to:
determine partial result data of the local transpose result data separately corresponding to each of the processor cores, and allocate the partial result data to the each of the processor cores, so that another processor core determines, based on the partial result data, a part of global transpose result data of performing the transpose operation on the first matrix.

14. The computing device according to claim 12, wherein the target processor core further comprises a data interaction unit, and the data interaction unit is further configured to:
receive, from another processor core, partial result data of the local transpose result data allocated to the another processor core; and
combine the partial result data of the local transpose result data allocated to the another processor core and allocated partial result data received from other processor cores as a part of global transpose result data of performing the transpose operation on the first matrix.

15. The computing device according to claim 12, wherein the plurality of processor cores are configured to execute a same fully homomorphic encryption computing task in parallel, the task relates to a plurality of transpose instructions, and a sequence in which the plurality of transpose instructions enter a processor core is the same for the plurality of processor cores.
